# EUROPEAN PATENT SPECIFICATION

(11) **EP 3 622 469 B1**
(45) Date of publication and mention of the grant of the patent: **01.04.2026**
(21) Application number: 17797987.9
(22) Date of filing: 10.10.2017
(51) Int. Cl.: G06Q 40/12

(54) **INFORMATIC SYSTEM FOR DETECTING AND CHECKING INFORMATION IN ECONOMIC TRANSACTIONS**
INFORMATIKSYSTEM ZUM ERFASSEN UND ÜBERPRÜFEN VON INFORMATIONEN IN WIRTSCHAFTLICHEN TRANSAKTIONEN
SYSTÈME INFORMATIQUE POUR DÉTECTER ET VÉRIFIER DES INFORMATIONS DANS DES TRANSACTIONS ÉCONOMIQUES

(30) Priority: 10.10.2016 IT 201600101373
(43) Date of publication of application: 18.03.2020
(60) Divisional application: 24171957.4
(73) Proprietor: Pergola, Alberto, 95045 Misterbianco (CT) (IT)
(72) Inventor: Pergola, Alberto, 95045 Misterbianco (CT) (IT)
(74) Representative: Perronace, Andrea
(86) International application number: PCT/IB2017/056249
(87) International publication number: WO 2018/069829

(56) References cited:
- US-A1- 2011 022 486
- US-A1- 2014 052 592
- ANONYMOUS: "Web scraping - Wikipedia, the free encyclopedia", 19 June 2015 (2015-06-19), XP055303583, Retrieved from the Internet <URL:https://en.wikipedia.org/w/index.php?title=Web_scraping&oldid=667566447> [retrieved on 20160919]

## Description

### Technical Field

The present invention is applicable in the technical field of commercial, administrative or financial data management systems, and relates to an informatic system for detecting and checking information in economic transactions, in particular tax information relating to tourism activities and temporary accommodation leasing in the tourism.

### State of the art

As known, the residence tax is a fee that many municipalities require to tourists or other nonresidents who are temporarily staying in any host structures of the city, such as hotels, B&Bs, guest houses or similar hostels.

Generally, the amount of this tax is calculated on the basis of multiple factors such as the number of days of stay, the amount paid, the type of accommodation or the type of visitor, with the possibility of any reductions or exemptions.

The collection of the residence tax is usually charged directly to the accommodation facility, which provide to declare the presence of the guests and to pay the fees collected in the municipal revenues according to the rules regulated by the individual municipalities.

However, the actual collection by the municipalities of the due tax has several problems because of the short duration of the tourist rentals that, for periods of less than 30 days, do not require registration of the contract with the Revenue Agency and because of the ever increasing offer to the public of rental of facilities for touristic use.

In addition, there is a growing number of private individuals other than the common facilities that make the property available for very limited periods of time, producing a huge amount of online advertisement for short periods of time.

Current tax checking and collection methods are based on a one-way exchange of information by the accommodation structures to the municipalities, without the latter being required to verify the truthfulness and completeness of such information.

In addition, the Municipalities are not even able to carry out systematic and comprehensive monitoring to verify the presence of unlisted structures or private entities that could completely escape the control by the Municipalities, by completely avoiding the payment of the tax.

The known IT systems for checking the payment of taxes by private individuals, such as those described in JP2003052998, generally involve the presence of a third party that collects data from several operators to send them to a central manager in order to generate a fee to be paid by the individual exhibitors, also performing a check on what was due and how much was paid.

These systems are designed to perform only a check on possible omitted payment but do not provide for a possible comparison between what is expected and what is communicated to the central administration and therefore are unable to identify any non-registered subjects or who fail to inform the central administration about a due payment.

US2014052592 and US2011022486 describe respective systems for calculating taxes based on electronically detected economic transactions. However, such systems are not suitable for verifying whether the fees paid correspond to the total amounts due in order to detect any evasion and allow the identification of any undeclared economic transactions.

A further limitation of the known solutions is found in cases where there is a need to check that the offer to the public is carried out only by authorized and registered accommodation facilities.

For this purpose, it is usually used to issue a code by the administration body to be included in the advertisement. This code, usually consisting of an alphanumeric string, identifies the accommodation that was previously registered at the entity.

However, many unauthorized advertisers copy the code of others and publish it in their advertisement, while others still omit the code entry when they are advertised online and therefore the booking portal has no way of verifying that the entered code is correct and yet unique.

In addition, some public administrations may impose operating limits on accommodation facilities, be they registered or not, in business or otherwise, whether regular or irregular, on the basis of the services offered in qualitative and/or quantitative terms.

By way of example, but not exhaustive, a maximum number of days of operation may be imposed on the accommodation facilities in order to be able to legitimately offer their service to the public.

However, it is difficult for public administrations to verify that bids published online on adverts or bookings portal from the same accommodation facilities actually comply with this legal limit.

This limit therefore allows the accommodation facilities to continue offering their service to the public, even after exceeding the maximum number of days permitted by law.

Last but not least, a further limit to the known solutions lies in the use of unreliable tools, such as merger-based studies, to verify the greater or lesser reliability of an advertiser, both with regard to the public administration and to client in terms of the reliability of the offer.

US2014052592Al describes a system for monitoring and auditing taxes on non-cash transactions. It collaborates with electronic payment processors to generate datasets for tax authorities, analyzes data, and directs tax deductions to the respective authority before vendor settlements. Additionally, it employs electronic transaction data and external databases for vendor identification and auditing.

US2011022486A1 describes a system for tax transactions in e-commerce, deducting various taxes like sales tax or value-added tax. It employs a trusted third-party server for tax calculation, transfer, and management. Software modules enable multi-jurisdictional tax processing and can be integrated into diverse systems or distributed widely.

The webpage titled "Web scraping - Wikipedia, the free encyclopedia", extracted 19 June 2015, describes a method of retrieving data from websites. The method is widely used by both organizations and individuals to gather substantial data for research, analysis, or automation. This involves accessing a website's HTML or structured data, parsing it, and extracting desired information. Programming languages like Python and tools like BeautifulSoup and Scrapy are commonly employed for web scraping.

### Scope of the invention

Object of the present invention is to overcome the above mentioned disadvantages by providing an informatic system for detecting and checking economic transactions, in particular tax information, enabling automatic acquisition of information about accommodation facilities and to the relative offers as well as about private entities that offer accommodation services to compare them with information available to the authorities destined to tax collection, in particular the residence tax, in order to report any omissions by the offering subjects.

A particular object is to provide an informatic system for detecting and checking information in economic transactions that allows all structures and persons providing temporary accommodation services for short periods of time or only occasionally to be registered, verifying the presence of subjects not registered at the authorities destined to tax collection.

Another object is to provide an informatic system for detecting and checking information in economic transactions that allows to automatically determine the amounts for residence taxes or other taxes due from each accommodation structure and possibly provide for its collection on behalf of the authority, also highlighting unreturned income which is relevant for income tax purposes.

Another object is to provide an informatic system for detecting and checking information in economic transactions that allows to regulate the phenomenon of home-sharing or other forms of non-regular accommodation facilities aiming to not paying taxes such as the residence tax or income tax.

Another purpose is to provide an informatic system for detecting and checking information in economic transactions that allows the detection of service offers by unauthorized parties.

Another object is to provide an informatic system for detecting and checking information in economic transactions that allows to verify the effective observance of the statutory limits on the operability of subjects offering their services through online advertising.

Another object is to provide an informatic system for detecting and checking information in economic transactions that allows the cataloging of the bidders according to their real reliability.

Such objects, as well as others that will become apparent later, are achieved by an informatic system for detecting and checking information in economic transactions, particularly tax information which, according to claim 1, comprises a plurality of local accommodation units adapted to provide a service offer via the Internet, one or more aggregating units adapted to collect the offers of said services by one or more of said local accommodation units to make it available to users via the Internet, one or more local tax collection units adapted to receive information relating to the actual delivery of said services transmitted by one or more of said local accommodation units to the determination of a tax to be paid thereby, a central monitoring unit adapted to automatically collect on the Internet, directly from said local accommodation units and/or through said aggregating units, a plurality of information relative to the services offered by said local accommodation units and the services actually provided thereby and to compare such information collected with the information transmitted to said tax collection units.

Suitably, the services offered may relate to the temporary rental of tourist accommodation, not excluding or limiting the relevance of the system to real estate property in the widest sense, and the tax may be any tax, including a tourist tax which the local accommodation unit will have to pay to a corresponding collection unit depending on the type of facility and/or the number of days and/or users who enjoy the service and/or the price paid by the users.

In this way, the central monitoring unit will automatically retrieve from the internet all the information about accommodation facilities that provide overnight accommodation, including temporary rental forms, whether they are registered with the local collection unit, for example a municipality or other public body responsible for the collection of taxes, or which are, instead, unregistered subject offering the service without authorization.

The system will allow to check possible tax evasion attempts, in particular the tourist tax, by exonerating public administrations from the task of verification and, where appropriate, of collection.

Advantageous embodiments of the invention are obtained according to the dependent claims.

### Brief disclosure of the drawings

Further features and advantages of the invention will become more apparent in the light of the detailed description of some operating modes of the system according to the invention illustrated by way of nonlimiting example with the aid of the attached drawings wherein:
**FIG. 1** schematically shows a checking system according to the state of art;
**FIG. 2** schematically shows a checking system according to the invention.

### Best mode of carrying out the invention

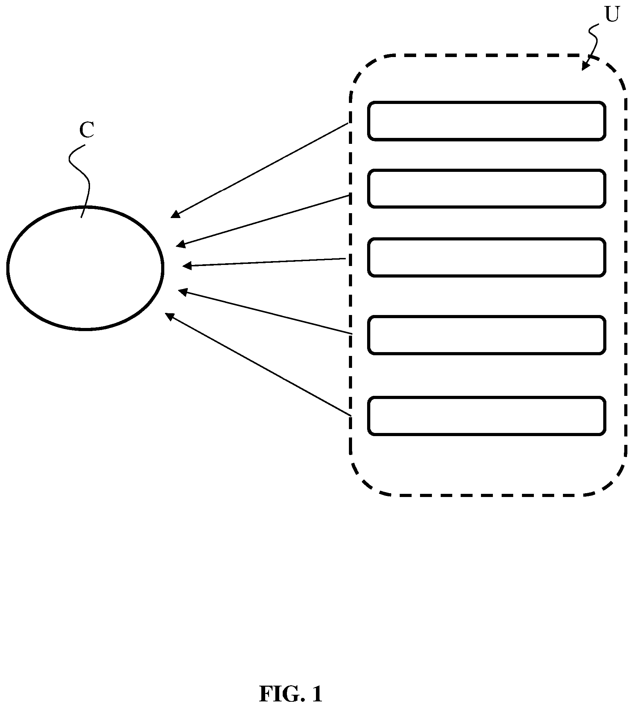

**Fig. 1** shows schematically a typical operating mode of a checking system according to known art, which essentially provides that the local accommodation units U, essentially represented by registered accommodation facilities such as hotels, B&B s, holiday homes, guest houses, tourist locations and the like, provide to the collection unit C, for example the respective municipality, information about the stay of one or more persons within the structure in order to determine the value of the tourist tax to be paid.

This information is transmitted unidirectionally from the local accommodation units U to the respective collection unit C without any countermeasures on their authenticity by this latter.

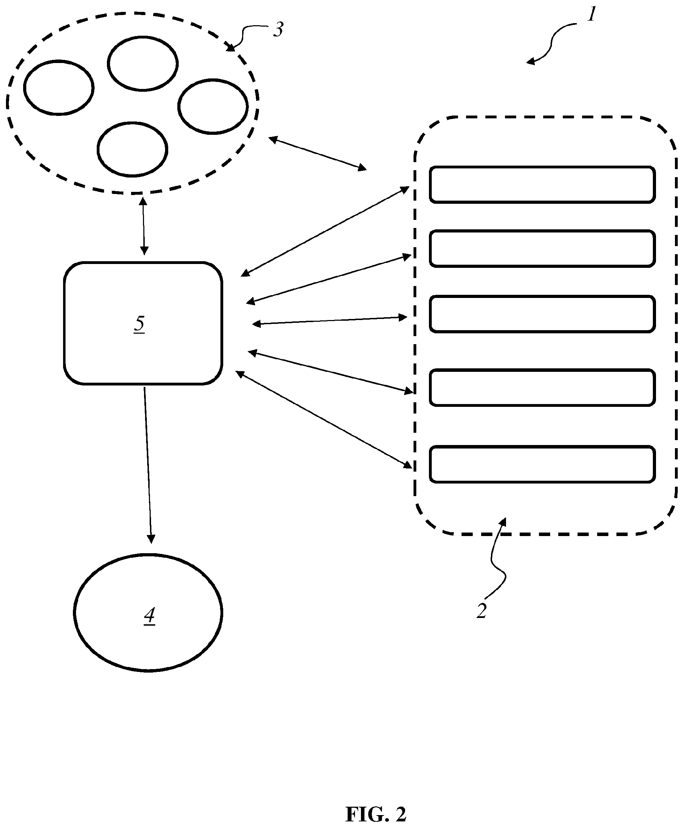

**Fig. 2** shows schematically a possible configuration of the system according to the invention, generally indicated by 1, which may be used in particular for checking the activity of the receptive structures and/or private subjects that make available one or more accommodation for tourist use or in any case designed to accommodate one or more people.

The system 1 essentially comprises a plurality of local accommodation units 2 providing a service offer via the Internet, in particular a temporary rental service for tourist or other use, one or more aggregating units 3 adapted to collect the offers made available by one or more local accommodation units 2 to make it available to a large number of users via the Internet in order to allow the purchase of such services, one or more local collection units 4 adapted to receive information relating to the actual provision of services for the determination of a tax to be paid by the local accommodation units 2.

Typically, the local accommodation units 2 may be either structures registered at the Revenue Agency or similar government bodies, such as hotels, B&B s, holiday homes, guest houses, tourist locations and the like, which private subjects who are not registered and who offer accommodation services temporarily, as in the case of so-called home-sharing services.

The local collection units 4 will instead be municipal or local authorities for collecting taxes related to the stay of users in the facilities located in the locations within their jurisdiction.

The tax may be any tax that the user of the service is required to pay, through the local accommodation unit 2 where he has stayed, to the corresponding local collection unit 4 depending on the type of facility where he/she has stayed and/or the number of persons and/or days spent in the specific location.

The tax may also be a type of tax due directly from the local accommodation unit 2 to the corresponding local collection unit 4 by virtue of tax obligations directly attributable to the local accommodation unit 2, according to the above mentioned parameters.

In addition, the system 1 may be used either to determine the types of taxes for which accommodation units 2 act as accounting agents, for example as a tax substitute, as in the case of the tourist tax wherein the user is the taxable person while the local accommodation unit 2 operates as a tax collector on behalf of the collection unit 4, or in the case of taxes referring directly to the accommodation units 2, such as the income taxes, wherein the taxable subjects are the same accommodation units 2, always allowing to identify any anomalies between what is stated and what is due.

The local accommodation units 2 may offer their services through their own website and/or through the website of one or more aggregating units 3.

The latter will be basically online ad aggregation platforms, search engine for tourist accommodation or other online platforms for the provision of accommodation services of a variety of offering subjects.

By way of example, such platforms may be both booking portals such as Booking.com, AirB&B, Homeway, Wimdu, Tripadvisor and the like, but also simple advertising portals that do not include the possibility of making any reservation, such as Subito.it, Ebay and the like.

The system 1 also includes a central monitoring unit 5 for collecting automatically from the local accommodation units 2 and/or through the aggregating units 3, a plurality of information about the services offered by the local accommodation units 2 and the services actually supplied thereby.

The central unit 5 will also be configured to compare information collected with information transmitted to local collection units 4 in order to verify any inconsistencies or omissions.

In particular, the system will be able to extract from the aggregating units 3, according to various operating modes described below, information such as price, number of persons, days, room name, type, tourist name and similar information regarding online listings published by accommodation units 2 already registered at local collection units 4 via the same system.

The information collected by the central monitoring unit 5 may not only be limited to the duration of the stay and the number of people staying, including all the information necessary to determine the value of the tax due also taking into account possible reductions or exemptions.

Preferably, the information collected by the monitoring unit 5 may also include identification data of the accommodation units 2 and identification data of the respective structures.

In this way, the monitoring unit 5 may divide the local accommodation units 2 according to the type and relative location by detecting both the local accommodation units 2 known to the corresponding local collection unit 4, with or without a VAT number, and the not known ones.

The system 1 will also allow to extrapolate information about the number of accommodation units 2 legally and fiscally present, with or without VAT number, about the number of accommodation units 2 unknown to the municipalities and to the tax office as well as about private subjects without tax status.

The central unit 5 will be provided with a software designed to allow the association of facilities in the territory of the reference municipality with their respective online advertisements.

After collecting this information, the central monitoring unit 5 will send it to the respective local collection units 4 according to their location, in order to verify the correspondence with the information already owned thereby.

In case of non-correspondence, the central unit 5 will generate an error signal and inform the corresponding local collection unit 4 in order to take the necessary action.

By way of example, if permitted by law, in the event of a difference between the information collected and the information transmitted, the central monitoring unit 5 may disable local accommodation units 2 from sending new offers, for example by making the website inaccessible or disabling the unregistered advertisement, both on the website of accommodation unit 2 and on the website of the aggregating unit 3.

According to a typical operating mode, the central monitoring unit 5 will be provided with a software adapted to acquire information about online offers published by accommodation units 2 through its website and/or the website of the aggregation units 3.

Next, it will create a list of advertisement selected by location, detecting and associating ads with the list of subjects regularly registered with the relative local body and dividing the subjects with and without VAT number.

At the same time, the central unit 5 may identify subjects not regularly registered at the local authority in order to automatically demand them in order they provide to regularize.

If an unregistered offer is detected, the central unit 5 may, if there is a specific rule, require the disabling of the unverified online ad.

The central unit 5 will also cross-examine and analyze the information provided by the registered accommodation units 2 with the information checked from the respective online ads present in the booking portals of the aggregating unit 3.

In addition, the software operating central unit 5 may be configured to automatically generate an estimate of the tax to be paid by each local accommodation unit 2 to the corresponding collection unit 4 according to the services actually provided for each accommodation facility managed by the specific accommodation unit 2.

Advantageously, the central monitoring unit 5 may also be capable of generating an estimate of the gross income generated by the individual local accommodation units 2 within a predetermined time interval corresponding to the operating period to communicate it to the corresponding collection units 4.

Data collected by the central monitoring unit 5 may also be remotely transmitted to a public entity other than the Municipalities, such as the Revenue Agency and/or the Tax Office.

According to a first operational mode, the central monitoring unit 5 may collect the information by means of automatic scanning, web scraping or web harvesting, or web data extraction, of the websites of local accommodation units 2 and/or of aggregating units 3 by means of a crawler or spider, if the aggregating units 3 authorize the central unit 5 to use it.

According to a further mode of operation, the central monitoring unit 5 may collect the information by means of web services made available by the aggregate units 3 and by which the necessary data is provided in aggregate form, exemplifying but not exhaustive by means of an API and/or XML service and/or similar services for the exchange of information.

Another way of extracting the data may be through a synchronization service, in an exemplificative but not exhaustive manner, a service with API protocol or in 1 or 2 way XML format, with companies developing and marketing CRS (Central Reservation System) on global scale and that offer Booking Engine services, Synchro Channel Manager services, Metasearch Manager services, CRO (Central Reservation Office) services, GDS connectivity and representation, and Marketing and Intelligence tools specially developed for the management of tourist accommodation.

This approach allows to always have available data, featuring all the features of an advanced switch system, with interfaces based, for example, on XML-certified channels.

In addition, the data recalled through web services have the advantage of not necessarily being allocated, as is the case of the web extracting activity.

A further mode of extracting data can be obtained through the calendar synchronization service provided by the aggregating unit 3 and present within the account of each accommodation unit 2 registered with the aggregating unit 3.

This calendar synchronization service will be made available to the user directly by the aggregating unit 3 in order to synchronize at the outside the reservations received.

Synchronization data may also come from other specific software for synchronizing bids on more online portals, so-called Channel Manager. In this case the data comes from the aggregating units 3 to the monitoring unit 5 not directly, but through a synchronization system that acts as a pre-canalizer of the data.

The system 1 may also comprise a software interface accessible from the local accommodation units 2 in order to enter the above information and transmit it to the central monitoring unit 5 for the appropriate verifications.

Thus, the central monitoring unit 5 may automatically match the offers checked through the aggregating units 3 with the offers inserted through the interface.

The interface will allow individual local accommodation units 2 to indicate personal identification data, property identifying data, contact information, and links to relevant online ads published to promote their business/service.

The accommodation units 2 will have a form linked to a calendar that will allow to enter, store and send the entrance and exit of each guest received at the accommodation facility, with the possibility to enter for each booking day one of the clause for excluding the application of the tourist tax.

The interface may also integrate additional functionality that will make it easier to verify the correctness and completeness of information and payment management.

By way of example, the interface may integrate the statutory modules for the management account, such as Modulo 21, and for fluxes control, such as the C59 ISTAT flow management module and/or additional modules selected among those commonly used for regular data transmission to Public Administration, including fluxes for Public Security and omitted payment statements.

The system 1 may make a list of evaders available to the local collection units 4 in order to facilitate the verification of the case.

The system 1 will be able to calculate and quantify the tourist tax due to the municipality by verifying the data provided with those recorded.

The central monitoring unit 5 will constantly communicate with the local accommodation units 2 through a notification panel indicating whether the data entered and communicated have irregularities with the detected ones, allowing the corresponding collection units 4 to control any omissions committed by the subject that have to pay the tax.

The payment of the tax may be made directly online by integrating the system 1 with the known payment systems, or by other traditional methods, by sending the payment receipts to the tax collecting units 4.

In particular, a first possible mode of operation provides that the software associated with the central unit 5 allows the local accommodation units 2 to pay through the use of traditional payment systems such as paypal, bank transfer, pagoPA, F24 module and the like, the incomings arriving directly to the corresponding local collection unit 4. In this case, the central unit 5 will operate as a technology partner of the public body.

In a second operating mode, the central unit 5 may fully replace the Public Administration, by cashing directly from the payee and then paying the fee to the collection unit 4 after deducting its commissions. In this second hypothesis, the software operates as a technology intermediary and is authorized to communicate directly with the telematic nodes of the Public Administration.

The collection units 4 will be able to access an own control panel for the management of the tourist tax, which will allow to upload, modify and consult, both manually and with automatic importation, the list of accommodation facilities already present in municipal register and relative real estate in their territory used for tourist reception.

In addition, the panel will allow to consult the list of ads sent by the central unit 5 that associates the active subjects with their list of accommodation facilities.

For each accommodation, real-time booking will be visible, which will include both the data provided by the volunteer registered accommodation units and the ones found by the central unit 5 automatically.

The intersection of these data will give a high accuracy of the facilities reservation information available for the registered accommodation units.

In addition, the collection unit 4 may configure the general preferences relating to the tax rules to be applied in its municipality and to perform the tax calculation that each accommodation unit is required to pay in the operating period with any exemption clauses, generating a list of the waiting and closed positions.

And yet, the collection unit 4 can configure the verification system of the central unit 5 to monitor the services offered by the local accommodation units 2, such as, but not limited to, the maximum allowable days of the proposed service from said local accommodation units 2. If there is no correspondence between the configuration of the collection unit 4 and the amount actually detected by the monitoring unit 5, the latter will generate an error signal and inform the corresponding local collection unit 4 in order to take the necessary action.

From above it will be apparent that the system according to the invention achieves the intended objects.

In particular, the system will be able to check the information provided by taxpayers, ensuring the tax authority on the truthfulness of the information received.

In addition, it will generate in the paying subject the awareness that voluntary information will have to be as reliable as possible, noting the inconsistencies between the number of rooms registered in the municipality and those actually offered to the public by the accommodation.

The system will also be able to identify private individuals without VAT, bringing a revenue to the municipal casks that would otherwise be submerged and difficult to regularize, monitoring the gross income generated by both private and business companies and bringing to light any undisclosed incomes.

This system will be an effective tool for regulating the economic growth of sectors such as home-sharing or other forms of non-regular tourist receptivity.

In addition, the public body, thanks to the sharing of ad information, may become a part of the business dialogue between online booking portals and individual private advertisers.

In a further aspect, the central unit 5 assigns to each local accommodation unit 2 an identification code to be associated with its service offerings.

The central unit 5 will also be adapted to detect, for each of these offers, the presence of the code and compare it with the one assigned for validating the offer.

In summary, each local accommodation unit 2, which will be registered at system 1, with respect to its own collection unit 4, will receive a licensed code provided as a tracking code, in a simplified but not exclusive manner, a script.

The local accommodation unit 2 must enter that code into each online advertisement through which it intends to advertise its activity. The computer tracking code at this point will call up a dedicated service of the monitoring unit 5, calling the servers thereof, and bringing with it the generated licensing code, specific to each publicized structure, and the url of the active online insertion. The use of the url is a non-exclusive parameter.

As soon as the insertion is online, the monitoring unit 5 will confirm in real time whether the online insertion belongs to a registered and identified subject, so known to the local collection unit 4, or not.

If so, the system 1 will validate the insertion, otherwise it will generate an error that will identify the insertion as non-genuine.

The validation, other than generating in real time a video error code in the online insertion, may alert aggregating units 3 about each ineligible online advertisement, allowing it to remove all unauthorized or non-compliant advertisements, avoiding that unauthorized users may use codes belonging to other accommodation units or that accommodation units offer unauthorized services.

According to a further aspect, the central monitoring unit 5 may compare the services provided by the same local accommodation unit 2 through various aggregating units 3 and to verify the presence of identical services offered through multiple aggregating units 3.

In summary, the system 1 may couple various advertisement present on different online portals of the various aggregating units 3 which in fact refer to the same tourist offer advertised by the same local accommodation unit 2.

In a further aspect, the system 1 will use a specific rating or compliance algorithm associated with each local accommodation unit 2, depending on the payment of taxes and the behavior of the reporting subject.

The system 1 will analyze the behavior of the monitored local accommodation units 2, assigning to each action a specific value and a certain weight, so that not only what is the declared is highlighted, but also the way it is done, for a reliability analysis of the data, which directly analyzes the behavior of the reporting subject.

By way of example, a judgment will be issued, ranging from O to 100, regarding the behavior of the taxpayer by analyzing several factors such as the correspondence between the number of reservations declared with those recorded or provided through services offered by the online portals, or the correspondence between the availability of the property in the online ads and reservations actually completed (the availability calendar on the ad is all busy but the subject declares that it has not received any reservation), or refusing to continuously provide the contacts of the tourist in the payment receipt form for the sending of the payment confirmation.

All these parameters as well as still others will have a specific weight to determine the reliability of the local accommodation unit 2 during the payment of taxes.

## Claims

1. A computer-implemented method for detecting and checking information in economic transactions, comprising the following steps:
A. providing a plurality of local accommodation units (2), each local accommodation unit (2) being adapted to make available a respective service offer on a respective accommodation website;
B. providing one or more aggregation units (3), each aggregation unit (3) being adapted to collect the respective service offers and make them available to users on a respective aggregation website;
C. providing one or more local collection units (4) adapted to receive information concerning the actual provision of service offers made available by the plurality of local accommodation units (2) for determining the tax to be paid by each local accommodation unit (2);
D. automatically collecting, by a central monitoring unit (5), directly from said respective accommodation websites and/or through said respective aggregation websites, a plurality of information concerning the service offers made available by said local accommodation units (2) and respective effective services provided thereby, the plurality of information comprising identification data of each of said accommodation units (2), wherein the central monitoring unit (5) collects the plurality of information by means of:
- automatic scan or web scraping of the respective accommodation websites and/or of said respective aggregation websites or by synchronization of the data obtained from local accommodation units (2) and/or supplied directly or indirectly through an intermediate synchronization system; and
- receiving/synchronizing data in aggregate mode, by means of an API and/or XML service for the exchange of information, coming directly or indirectly from said respective one or more aggregation websites;
E. comparing, by said central monitoring unit (5), the service offers made available by each local accommodation unit (2) through said aggregation websites to check the presence of identical service offers in more than one aggregation website;
F. providing a software interface accessible by each of said local accommodation units (2) for entering information and transmitting them to said central monitoring unit (5);
G. automatically matching, by said central monitoring unit (5), the plurality of information collected in step D through said respective aggregation websites with the information entered and transmitted to the central monitoring unit (5) in step F through said software interface;
H. dividing said local accommodation units (2) according to their relative location based on identification data, identifying both the local accommodation units (2) known to the corresponding local collection unit (4) and the local accommodation units (2) not known to the corresponding local collection unit (4);
I. sending, by said central monitoring unit (5), said plurality of information collected in step D to the corresponding local collection unit (4);
J. generating an error signal, by said central monitoring unit (5), in case of non-correspondence detected in step G.

2. Method as claimed in claim 1, **characterized in that** the services offers are related to temporary rental of accommodations for tourist use, included sharing accommodations and temporary rental of houses for tourist use, such tax being to be paid by each local accommodation unit (2) to a corresponding local collection unit (4) depending on the type of accommodation and/or of the number of days and/or users using the service offered by each local accommodation unit (2) and/or of the payed price from the users for said service.

3. Method as claimed in any preceding claim, **characterized in that**, it further comprises executing the following step:
G1. disabling, by said central monitoring unit (5), the local accommodation unit (2) from sending new service offers in case of non-correspondence detected in step G.

4. Method as claimed in any preceding claim, **characterized in that**, after step D, it further comprises executing the following step:
D1. automatically generating, by said central monitoring unit (5), an estimated tax to be paid by each of said local accommodation units (2) as a function of the plurality of information collected in step D.

5. Method as claimed in any preceding claim, **characterized in that**, after step D, it further comprises executing the following step:
D2. generating, by said central monitoring unit (5), an estimate of gross income generated by each of said local accommodation units (2) in a predetermined time interval ; and
D3. communicating said gross income to the corresponding local collection unit (4).

6. Method as claimed in any preceding claim, **characterized in that**, it further comprises executing the following steps:
G2. assigning, by said central unit (5), to each of said local accommodation units (2) an identification code to be associated with the respective service offers;
G3. detecting, by said central unit (5), the presence of said identification code for each of said service offers on the respective accommodation website and/or aggregation websites; and
G4. comparing the identification code with the one assigned to each of said local accommodation units (2) in step G2 for the validation of the service offer.

7. Method as claimed in any preceding claim, **characterized in that**, after step G, it further comprises executing the following:
G5. comparing and/or monitoring, by said central monitoring unit (5), operating limits, preset by said collection units (4), of the services offered by each of said local accommodation units (2) with the actual services offered thereby and advertised also through said aggregating units (3) to detect any non-correspondence.

## Patentansprüche

1. Computerimplementiertes Verfahren zum Erkennen und Überprüfen Informationen in wirtschaftlichen Transaktionen, umfassend die folgenden Schritte:
A. Bereitstellen einer Mehrzahl lokaler Unterkunftseinheiten (2), wobei jede lokale Unterkunftseinheit (2) eingerichtet ist, ein jeweiliges Dienstangebot auf einer jeweilige Unterkunftswebsite bereitzustellen;
B. Bereitstellen einer oder mehrerer Aggregationseinheiten (3), wobei jede Aggregationseinheit (3) eingerichtet ist, die jeweiligen Dienstangebote zu sammeln und sie den Nutzern auf einer jeweiligen Aggregationswebsite zur Verfügung zu stellen;
C. Bereitstellen einer oder mehrerer lokaler Sammlungseinheiten (4), die eingerichtet sind, Informationen über die tatsächliche Bereitstellung von Dienstangeboten, die von der Mehrzahl lokaler Unterkunftseinheiten (2) zur Verfügung gestellt werden, um die von jeder lokalen Unterkunftseinheit (2) zu zahlende Steuer zu bestimmen;
D. Sammeln automatisch, durch eine zentrale Überwachungseinheit (5), direkt von den jeweiligen Unterkunftswebsites und/oder über die jeweiligen Aggregationswebsites, einer Mehrzahl von Informationen über die Dienstangebote, die von den lokalen Unterkunftseinheiten (2) zur Verfügung gestellt werden sowie die Dienste, die tatsächlich bereitgestellt werden, wobei die Mehrzahl von Informationen Identifikationsdaten jeder der Unterkunftseinheiten (2) umfasst, wobei die zentrale Überwachungseinheit (5) die Mehrzahl von Informationen mit den folgenden Schritten sammelt:
- Abtasten automatisch oder Web Scraping (Bildschirm Schürfen) der jeweiligen Unterkunftswebsites und/oder der jeweiligen Aggregationswebsites oder durch Synchronisation der Daten, die von den lokalen Unterkunftseinheiten (2) erhalten werden und/oder direkt oder indirekt über ein zwischengeschaltetes Synchronisationssystem bereitgestellt werden; und
- Empfangen/Synchronisieren der Daten in Aggregatmodus mittels eines API- und/oder XML-Dienstes zum Informationsaustausch, die direkt oder indirekt von den jeweiligen Aggregationswebsites stammen;
E. Vergleichen, durch die zentrale Überwachungseinheit (5), der Dienstangebote, die von jeder lokalen Unterkunftseinheit (2) über die Aggregationswebsites zur Verfügung gestellt werden, um die Anwesenheit identischer Dienstleistungsangebote in mehr als einer Aggregationswebsite zu überprüfen;
F. Bereitstellen einer Software-Schnittstelle, die von jeder der lokalen Unterkunftseinheiten (2) zugänglich ist, um Informationen einzugeben und diese an die zentrale Überwachungseinheit (5) zu senden;
G. Anpassen automatisch, durch die zentrale Überwachungseinheit (5), der Mehrzahl von Informationen, die in Schritt D über die jeweiligen Aggregationswebsites gesammelt wurden, mit den Informationen, die in Schritt F über die Software-Schnittstelle eingegeben wurden und an die zentrale Überwachungseinheit (5) gesendet wurden;
H. Aufteilen der lokalen Unterkunftseinheiten (2) nach ihrer relativen Lage basierend auf der Identifikationsdaten, indem sowohl die lokalen Unterkunftseinheiten (2), die der entsprechenden lokalen Sammlungseinheit (4) bekannt sind als auch die lokalen Unterkunftseinheiten (2) die der entsprechenden lokalen Sammlungseinheit (4) nicht bekannt sind, identifiziert werden;
I. Senden, durch die zentrale Überwachungseinheit (5), der Mehrzahl von Informationen, die in Schritt D gesammelt wurden, an die entsprechende lokale Sammlungseinheit (4);
J. Erzeugen eines Fehlersignals, durch die zentrale Überwachungseinheit (5), im Falle einer Nichtübereinstimmung, die in Schritt G erkannt wurde.

2. Verfahren nach Anspruch 1, **dadurch gekennzeichnet, dass** die Dienstangebote mit der zeitweiligen Vermietung von Unterkünften zu touristischen Zwecken in Beziehung stehen, einschließlich Teilen Unterkünften sowie der zeitweiligen Vermietung von Häusern zu touristischen Zwecken, wobei eine solche Steuer von jeder lokalen Unterkunftseinheit (2) an eine entsprechende lokale Sammlungseinheit (4) in Abhängigkeit von der Art der Unterkunft und/oder der Anzahl der Tage und/oder der Nutzer, die den Dienst nutzen, der von jeder lokalen Unterkunftseinheit (2) angeboten wird, und/oder des Preises, der von den Nutzern für den Dienst bezahlt wird, bezahlt werden soll.

3. Verfahren nach einem der vorhergehenden Ansprüche, **dadurch gekennzeichnet, dass** es ferner das Durchführen des folgenden Schrittes umfasst:
G1. Deaktivieren, durch die zentrale Überwachungseinheit (5), der lokalen Unterkunftseinheit (2), um das Senden neuer Dienstangebote zu unterbinden, falls eine Nichtübereinstimmung in Schritt G erfasst wird.

4. Verfahren nach einem der vorhergehenden Ansprüche, **dadurch gekennzeichnet, dass** es nach Schritt D ferner das Durchführen des folgenden Schrittes umfasst:
D1. Erzeugen automatisch, durch die zentrale Überwachungseinheit (5), einer geschätzten Steuer, die von jeder der lokalen Unterkunftseinheiten (2) bezahlt werden soll, in Abhängigkeit von der Mehrzahl von Informationen, die in Schritt D gesammelt wurden.

5. Verfahren nach einem der vorhergehenden Ansprüche, **dadurch gekennzeichnet, dass** es nach Schritt D ferner das Durchführen des folgenden Schrittes umfasst:
D2. Erzeugen, durch die zentrale Überwachungseinheit (5), einer Schätzung des Bruttoeinkommens, das von jeder der lokalen Unterkunftseinheiten (2) in einem vorbestimmten Zeitintervall erhalten wurde; und
D3. Melden des genannten Bruttoeinkommens an die entsprechende lokale Sammlungseinheit (4).

6. Verfahren nach einem der vorhergehenden Ansprüche, **dadurch gekennzeichnet, dass** es ferner das Durchführen der folgenden Schritte umfasst:
G2. Zuweisen, durch die zentrale Einheit (5), zu jeder der lokalen Unterkunftseinheiten (2) eines Identifikationscodes, der den jeweiligen Dienstangeboten zugeordnet werden soll;
G3. Erfassen, durch die zentrale Einheit (5), die Anwesenheit des Identifikationscodes für jedes der Dienstangebote auf der jeweiligen Unterkunftswebsite und/oder den Aggregationswebsites; und
G4. Vergleichen des Identifikationscodes mit demjenigen, der jeder der lokalen Unterkunftseinheiten (2) in Schritt G2 zugewiesen wurde, zur Validierung des Dienstangebotes.

7. Verfahren nach einem der vorhergehenden Ansprüche, **dadurch gekennzeichnet, dass** es nach Schritt G ferner das Durchführen des folgenden Schrittes umfasst:
G5. Vergleichen und/oder Überwachen, durch die zentrale Überwachungseinheit (5), Betriebsgrenzen, die von die Sammlungseinheiten (4) voreingestellt werden, der Dienste, die von jeder der lokalen Unterkunftseinheiten (2) angeboten wurden, mit den tatsächlichen Diensten, die dadurch angeboten wurden und ebenfalls über die Aggregationseinheiten (3) beworben wurden, um jede Nichtübereinstimmung zu erfassen.

## Revendications

1. Procédé mis en œuvre par ordinateur pour détecter et vérifier des informations dans des transactions économiques, comprenant les étapes suivantes :
A. fournir une pluralité d'unités locales d'hébergement (2), chaque unité locale d'hébergement (2) étant adaptée pour mettre à disposition une offre de service respective sur un site web d'hébergement respectif ;
B. fournir une ou plusieurs unités d'agrégation (3), chaque unité d'agrégation (3) étant adaptée pour collecter les offres de service respectives et les mettre à disposition des utilisateurs sur un site web d'agrégation respectif ;
C. fournir une ou plusieurs unités locales de collecte (4) adaptées pour recevoir des informations concernant la fourniture effective des offres de service mises à disposition par la pluralité d'unités locales d'hébergement (2) afin de déterminer la taxe devant être payée par chaque unité locale d'hébergement (2) ;
D. collecter automatiquement, par une unité centrale de surveillance (5), directement à partir des sites web d'hébergement respectifs et/ou au moyen des sites web d'agrégation respectifs, une pluralité d'informations concernant les offres de service mises à disposition par lesdites unités locales d'hébergement (2) et les services effectifs respectifs fournis par celles-ci, la pluralité d'informations comprenant des données d'identification de chacune desdites unités d'hébergement (2),
l'unité centrale de surveillance (5) collectant la pluralité d'informations au moyen de :
un balayage automatique ou un web scraping des sites web d'hébergement respectifs et/ou desdits sites web d'agrégation respectifs ou par synchronisation des données obtenues à partir des unités locales d'hébergement (2) et/ou fournies directement ou indirectement par l'intermédiaire d'un système intermédiaire de synchronisation ; et
la réception/la synchronisation de données en mode agrégé, au moyen d'un service API et/ou XML pour l'échange d'informations, provenant directement
ou indirectement desdits sites web d'agrégation respectifs ;
E. comparer, par ladite unité centrale de surveillance (5), les offres de service mises à disposition par chaque unité locale d'hébergement (2) par l'intermédiaire desdits sites web d'agrégation afin de vérifier la présence d'offres de service identiques sur plus d'un site web d'agrégation ;
F. fournir une interface logicielle accessible par chacune desdites unités locales d'hébergement (2) pour saisir des informations et les transmettre à ladite unité centrale de surveillance (5) ;
G. mettre automatiquement en correspondance, par ladite unité centrale de surveillance (5), la pluralité d'informations collectées à l'étape D par l'intermédiaire desdits sites web d'agrégation respectifs avec les informations saisies et transmises à l'unité centrale de surveillance (5) à l'étape F par l'intermédiaire de ladite interface logicielle ;
H. diviser lesdites unités locales d'hébergement (2)
en fonction de leur localisation relative sur la base des données d'identification, en identifiant à la fois les unités locales d'hébergement (2) connues de l'unité locale de collecte correspondante (4) et les unités d'hébergement (2) non connues de l'unité locale de collecte correspondante (4) ;
I. envoyer, par ladite unité centrale de surveillance (5), ladite pluralité d'informations collectées à l'étape D à l'unité locale de collecte correspondante (4) ;
J. générer un signal d'erreur, par ladite unité centrale de surveillance (5), en cas de non-correspondance détectée à l'étape G.

2. Procédé selon la revendication 1, **caractérisé en ce que** les offres de service sont liées à la location temporaire de logements à usage touristique, y compris le partage de logements et la location temporaire de maisons à usage touristique, ladite taxe devant être payée par chaque unité locale d'hébergement (2) à une unité locale de collecte correspondante (4) en fonction du type de logement et/ou du nombre de jours et/ou des utilisateurs utilisant le service offert par chaque unité locale d'hébergement (2) et/ou du prix payé par les utilisateurs pour ledit service.

3. Procédé selon l'une quelconque des revendications précédentes, **caractérisé en ce qu'**il comprend en outre l'exécution de l'étape suivante :
G1. désactiver, par ladite unité centrale de surveillance (5), l'unité locale d'hébergement (2) afin de l'empêcher d'envoyer de nouvelles offres de service en cas de non-correspondance détectée à l'étape G.

4. Procédé selon l'une quelconque des revendications précédentes, **caractérisé en ce qu'**après l'étape D, il comprend en outre l'exécution de l'étape suivante :
D1. générer automatiquement, par ladite unité centrale de surveillance (5), une taxe estimée devant être payée par chacune desdites unités locales d'hébergement (2) en fonction de la pluralité d'informations collectées à l'étape D.

5. Procédé selon l'une quelconque des revendications précédentes, **caractérisé en ce qu'**après l'étape D, il comprend en outre l'exécution de l'étape suivante :
D2. générer, par ladite unité centrale de surveillance (5), une estimation du revenu brut généré par chacune desdites unités locales d'hébergement (2) sur un intervalle de temps prédéterminé ; et
D3. communiquer ledit revenu brut à l'unité locale de collecte correspondante (4).

6. Procédé selon l'une quelconque des revendications précédentes, **caractérisé en ce qu'**il comprend en outre l'exécution des étapes suivantes :
G2. attribuer, par ladite unité centrale (5), à chacune desdites unités locales d'hébergement (2) un code d'identification à associer aux offres de service respectives ;
G3. détecter, par ladite unité centrale (5), la présence dudit code d'identification pour chacune desdites offres de service sur le site web d'hébergement respectif et/ou sur les sites web d'agrégation ; et
G4. comparer le code d'identification avec celui attribué à chacune desdites unités locales d'hébergement (2) à l'étape G2 pour la validation de l'offre de service.

7. Procédé selon l'une quelconque des revendications précédentes, **caractérisé en ce qu'**après l'étape G, il comprend en outre l'exécution de l'étape suivante :
G5. comparer et/ou surveiller, par ladite unité centrale de surveillance (5), des limites de fonctionnement, prédéfinies par lesdites unités de collecte (4), des services offerts par chacune desdites unités locales d'hébergement (2) avec les services effectivement offerts par celles-ci et également annoncés par l'intermédiaire desdites unités d'agrégation (3), afin de détecter toute non-correspondance.
